# EUROPEAN PATENT APPLICATION

(11) **EP 1 575 286 A2**
(43) Date of publication of application: **14.09.2005**
(21) Application number: 05101471.0
(22) Date of filing: 25.02.2005
(51) Int. Cl.: H04N 5/77

(54) **Combined camcorder and stills camera**

(30) Priority: 10.03.2004 KR 2004016048
(71) Applicant: SAMSUNG ELECTRONICS CO., LTD., Gyeonggi-do 442-742 (KR)
(72) Inventor: Lee, Yong-hyun 223-1104, 1053-2 Hwanggol-maeul, Suwon-si, Gyeonggi-do (KR)
(74) Representative: Geary, Stuart Lloyd

(57) **Abstract**

Disclosed is a composition photographing apparatus and a sound recording method using the same. The Digital Still Camera (DSC) and Digital Video Camera (DVC) composition photographing apparatus has a multiplexer (MUX) (245) connected to the DSC (140) and the DVC (120), respectively, that multiplexes moving image signals received from the DSC (140) and the DVC (120), respectively. An Audio coder decoder (CODEC) (250) codes the electric signals and combines the coded electric signals with the moving image signals multiplexed by the MUX (245). A control unit (211) controls the multiplexing process of the MUX (245).

## Description

The present invention relates in general to a combined camcorder and still camera apparatus comprising digital video imaging means, digital still imaging means.

In general, a digital still camera (DSC) coverts an image formed by a lens into a digital signal and stores the digital signal on a recording medium such as a hard disk or a memory card. That is, captured images are not recorded on photochemical film but are converted into digital signals first and then are recorded on a recording medium such as a hard disk or a memory card. Therefore, the images stored in the recording medium can be transferred directly to digital equipment, such as personal computers or the like, without undergoing digital conversion by a scanner. Digital still cameras (DSC) are highly compatible with PCs so that anyone can easily edit and modify the images produced thereby. Also, DSCs tend to have similar physical characteristics as conventional photochemical cameras and are easy to carry around. DSCs include a lens, a memory unit, a signal modulation unit and a display and, due to the small capacity of the recording medium, are mainly used for capturing still images. In other words, although DSCs are often capable of capturing moving images, they cannot do so for extended periods.

Digital video cameras (DVC), on the other hand, are capable of recording moving images and sound on a recording medium, such as a magnetic tape or a hard disk, for extended periods.

DVCs include a lens, a signal conversion unit, a deck for recording and reproducing captured moving images, and a display. Also, DVCs include a microphone and a speaker and are capable of recording moving images on the recording medium for periods in excess of hour. Of course, DVCs can be used for capturing still images. However, since the picture quality thereof is relatively poor compared with that of DSCs, DVCs are mainly used for capturing moving images. Compared to DSCs, DVCs are more complicated in their structure and functions and, thus, are generally bulky and expensive.

Until recently, consumers had to purchase both a DSC and a DVC in order to benefit from the advantages of each, but that was very uneconomical. In addition, having to carry two products at the same time and learn how to operate two cameras further inconvenienced consumers.

In an attempt to solve the above problems, there has been developed a DSC/DVC combination system, where the DSC and the DVC are combined in one case. This is also called a 'digital camera/camcorder', a composition photographing apparatus, or simply a 'DuoCam'.

When a user photographs a moving image through the DVC of the composition photographing apparatus, conforming to the Digital Video standard, transmits 30 frames per second and synchronizes an audio signal to 32kHz, 48kHz, or 44.1kHz. On the other hand, when the user photographs a moving image through the DSC of the composition photographing apparatus, although there is no specific standard for the DSC, the audio signal is generally synchronized to 8kHz in consideration with of the amount of data to be transmitted.

Since the DVC and the DSC of the composition photographing apparatus uses different frequencies for the audio signal, an Audio CODEC is required in response to the DVC and the DSC, respectively. This only increases the cost of manufacturing the apparatus and the size of the composition photographing apparatus.

Accordingly, it is an aim of the present invention to provide a composite imaging apparatus and a sound recording method using the same, that is synchronizable with a DVC as well as a DSC, Audio CODEC for video and stills.

In order to achieve the above-described objects of the present invention, there is provided a Digital Still Camera (DSC) and Digital Video Camera (DVC) composition photographing apparatus, which includes a multiplexer (MUX) connected to the DSC and the DVC, respectively, and for multiplexing moving image signals received from the DSC and the DVC, respectively; an Audio CODEC for coding audio signals and combining the coded audio signals with the moving image signals multiplexed by the MUX; and a control unit for controlling the multiplexing process of the MUX.

Preferably, the composition photographing apparatus further comprises a microphone for receiving surrounding sounds and converting the sounds into electric audio signals.

Preferably, the DSC and the DVC, respectively, output a master clock (CLK) for synchronization with the Audio CODEC, and the Audio CODEC samples the coded audio signals based on the master CLK received through the MUX and combines the audio signal samples with the multiplexed moving image signals.

Preferably, the Audio CODEC samples the coded audio signals within a frequency range of 8kHz to 60kHz.

In addition, there is provided a sound recording method of a DSC and DVC composition photographing apparatus, the method comprising the steps of receiving surrounding sounds and converting the sounds into electric audio signals; multiplexing moving image signals received from the DSC and the DVC, respectively; coding the converted audio signals; and sampling the coded audio signals and combining the audio signal samples with the multiplexed moving image signals.

Preferably, the sound recording method further comprises the step of outputting a master CLK for the synchronization with an Audio CODEC in the DSC and the DVC, wherein the Audio CODEC samples the coded audio signals based on the master CLK and combines the audio signal samples with the multiplexed moving image signals.

Therefore, the composition photographing apparatus of the invention using an integrated Audio CODEC can more effectively combine audio signals with moving image signals received from the DVC or the DSC.

Additional preferred and optional features are set forth in claims 8 and 9 appended hereto.

An embodiment of the present invention will now be described, by way of example, with reference to the accompanying drawings, in which:
Figure 1 is a schematic block diagram of a composite camera according to the present invention;
Figure 2 is a diagram illustrating the audio unit of Figure 1; and
Figure 3 is a flowchart illustrating a sound recording method of Figure 2.

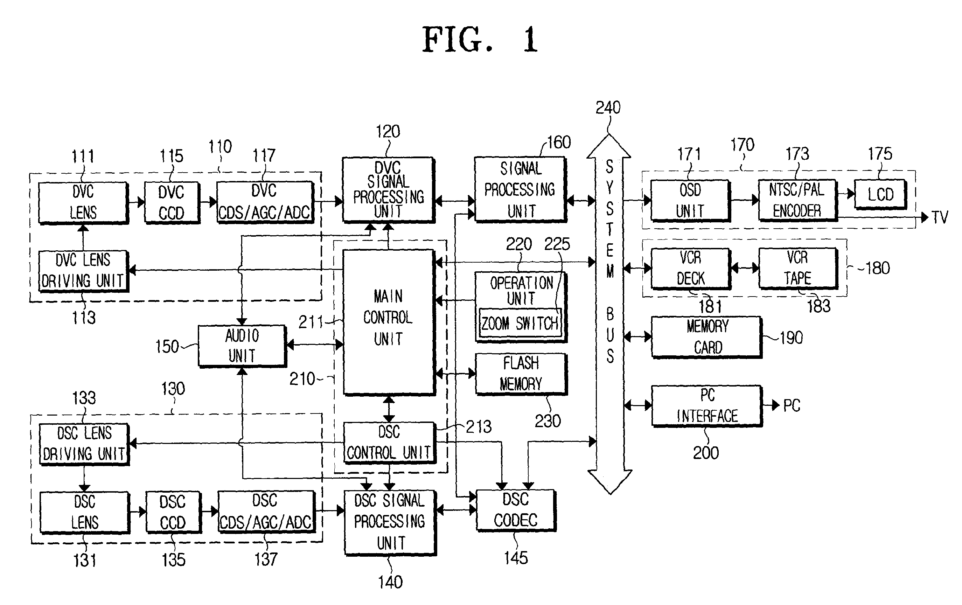

Referring to Figure 1, a composite imaging apparatus, according to the present invention, comprises a Digital Video Camera (DVC) imaging block 110, a DVC signal processing unit 120, a Digital Still Camera (DSC) imaging block 130, a DSC signal processing unit 140, DSC COrder/DECoder (CODEC) 145, an audio unit 150, a signal processing unit 160, a display block 170, a Video Cassette Recorder (VCR) block 180, a memory card 190, PC interface 200, a control block 210, an operation unit 220, a flash memory 230 and a system bus 240.

The DVC imaging block 110 photoelectrically converts an optical image formed by a lens into an electric signal and processes the electric signal. The DVC imaging block 110 is capable of capturing both moving images and still images. However, the picture quality of the still images, captured by the DVC imaging block 110, is poorer than that of the still images, captured by the DSC imaging block 130. Therefore, the DVC photographing block is used mainly for capturing moving images.

The DVC imaging block 110 comprises a DVC lens 111, a DVC lens driving unit 113, a DVC Charge Coupled Device (CCD) 115, and a DVC Correlated Double Sampler/Auto Gain Controller/Analogue-to-Digital Converter (CDS/AGC/ADC) 117.

The DVC lens driving unit 113 drives the DVC lens 111 under the control of the control block 210. More specifically, the lens driving unit 113 zooms the DVC lens 111 in and out, automatically adjusts the focus and adjusts the aperture size of a diaphragm (not shown) associated with the DVC lens 111.

The DVC CCD 115 converts an optical image formed by the DVC lens 111 into an electric signal and outputs the electric signal. That is, the optical image of a scene is formed on an photo-sensitive surface of the DVC CCD 115 by the DVC lens 111 and the DVC CCD 115 converts the optical image, formed on the photo-sensitive surface, into an electric signal, performs horizontal and vertical scanning to generate the electric signal and outputs it in the form of an one-dimensional electric signal.

The DVC CDS/AGC/ADC 117 removes noise from the output signal of the DVC CCD 115 using the Correlated Double Sampling circuit (CDS) and uses the Auto Gain Controlling circuit (AGC) to keep the signal's level constant, and converts the output signal to a digital signal using the A/D Converter.

The DVC signal processing unit 120 processes digital signals from the DVC imaging block 110 and applies the processed signals to the signal processing unit 160. More specifically, the DVC signal processing unit 120 separates the applied digital signal into a luminance (Y) signal and a chrominance (C) signal, performs gain control, image enhancement and Auto White Balance (AWB), and changes the resolution. Also, the DVD signal processing unit 120 processes the sound signals generated by the audio unit 150.

The audio unit 150 receives ambient sound and generates sound signals corresponding to the image signals generated by the DVC imaging block 110 and the DSC imaging block 130.

The signal processing unit 160 applies the image signal and the sound signal which are processed by the DVC signal processing unit 120 to the display block 170. Here, when the signal processing unit 160 receives from the control block 210, a 'capture command', which the user input into the operation unit 220, the signal processing unit 160 compresses the output signal from the DVC signal processing unit 120 to a Digital Video signal.

Also, the signal processing unit 160 under the control of the control block 210 sends the compressed signals for recording to a VCR block 180.

Alternatively, if the composite imaging apparatus is operated in 'VCR play' mode, the signal processing unit 160, under the control of the control block 210, receives the compressed image and sound signals being reproduced from the VCR block 180 and the signal processing unit 160 expands the received compressed image signals and applies them to the display block 170.

The DSC imaging block 130 photoelectrically converts optical images, formed by the lens, into electric signals and processes the converted signals. The DSC imaging block 130 can capture both moving images and still images. However, moving images, captured by the DSC imaging block 130, typically comprise more data than moving images captured by the DVC imaging block 110. This means that a greater amount of storage is required to record moving image data in the recording medium, so it is not practical to capture moving images for an extended period of time. Therefore, the DSC imaging block 130 is mainly used for capturing still images.

The DSC imaging block 130 comprises a DSC lens 131, a DVC lens driving unit 133, a DSC Charge Coupled Device (CCD) 135, and a Correlated Double Sampler/Auto Gain Controller/Analogue-to-Digital converter (DSC CDS/AGC/ADC) 137.

The DSC lens driving unit 133, under the control of the control block 210, drives the DSC lens 131. More specifically, the DSC lens driving unit 133, under the control of the control block 210, zooms the DSC lens 131 in and out, automatically focuses and adjusts the aperture size of a diaphragm (not shown) of the DSC lens 131.

The DSC CCD 135 converts optical images, formed by the DSC lens 131, into electric signals and outputs the converted signals.

The DSC CDS/AGC/ADC 137 removes noise from the signal output from the DSC CCD 135 using the CDS, keeps the level constant using the AGC and converts the output signal to a digital signal using the ADC.

The DSC signal processing unit 140 processes the signal output from the DSC imaging block 130. More specifically, the DSC signal processing unit 140 separates the signal, output from the DSC photographing block 140, into a luminance (Y) signal and a chrominance (C) signal and is involved in gain control, image enhancement and Auto White Balance (AWB), and changes the resolution. Also, the DSC signal processing unit 140 processes the sound signal, generated by the audio unit 150.

The DSC CODEC 145 applies the image signal and the sound signal, processed by the DSC signal processing unit 140, to the display block 170 via the system bus 240.

When the DSC CODEC 145 receives a 'capture command' that the user has input into the operation unit 220, it compresses the output signal from the DSC signal processing unit 140 into a JPEG format signal. The DSC CODEC 145, under the control of the control block 210, records the compressed signal in the memory card 190 via the system bus 240.

If the composite imaging apparatus is operating in 'memory card reproduce' mode, the DSC CODEC 145, under the control of the control block 210, receives the compressed image and sound signals from the memory card 190 for reproduction. The DSC CODEC 145 expands the compressed image and sound signals and applies them to the display block 170.

The display block 170 displays output image signals from the signal processing unit 160 and the DSC CODEC 145, and outputs the sound signals. The display block 170 includes On Screen Display (OSD) unit 171, a National Television System Committee/ Phase Alternation Line (NTSC/PAL) encoder 173 and a Liquid Crystal Display (LCD) 175.

The OSD unit 171 stores OSD characters and Graphic User Interface (GUI) data, such as a menu screen, required for constructing a GUI environment. The OSD unit 171, under the control of the control block 210, combines output images from the signal processing unit 160 and the DSC CODEC 145 with OSD characters or GUI data.

The NTSC/PAL encoder 173 converts the image signals output from the OSD unit 171 to NTSC or PAL signals and applies them to an external device, such as a television or the like. The LCD 175 displays the images applied, unencoded, from the NTSC/PAL encoder 241.

The VCR block 180 records image signals, output from the signal processing unit 160, and reads recorded image signals which it applies to the signal processing unit 160. The VCR block 180 comprises a VCR deck 181 and a VCR tape 183.

The VCR tape 183 is a magnetic recording medium for recording image and sound signals and can be removed from the VCR deck 181.

The VCR deck 181 records image and sound signals, applied from the signal processing unit 160, on the VCR tape 183 and reads image signals, recorded on the VCR tape 183, for input to the signal processing unit 160.

The memory card 190 is preferably the recording medium for recording image signals and sound signal applied from the DSC CODEC 145, and is detachable from the composite imaging apparatus.

The PC interface 200 provides an interface for external devices, such as PCs or printers.

The control block 210 controls the general operations of the composite imaging apparatus, according to the user-input operation commands through the operation unit 220. In particular, the control block 210 controls the DVC imaging block 110 or the DSC imaging block 130 to capture an image in response to a command input by the user. The control block 210 comprises a main control unit 211, a MUX 245, an Audio CODEC 250 and a DSC control unit 213.

The main control unit 211 receives an operation command, that the user has input into the operation block 220, and controls the operations of the DVC lens driving unit 113, the DVC signal processing unit 120, the signal processing unit 160, the OSD unit 171, the VCR deck 181, and the PC interface 200. Also, the main control unit 211 controls the operation of the DSC control unit 312.

The DSC control unit 213, under the control of the main control unit 211, controls the operations of the DSC lens driving unit 133, the DSC signal processing unit 140, and the DSC CODEC 145.

The flash memory 230 preferably stores therein a system program for use in the operation of the apparatus, such as a booting program, needed by the main control unit 230, other important data, which has to be saved even after the power is turned off, and application.

The operation unit 220 is a user interface for receiving, from the user, operation commands associated with the selection of a function and the operational control of the composite imaging apparatus.

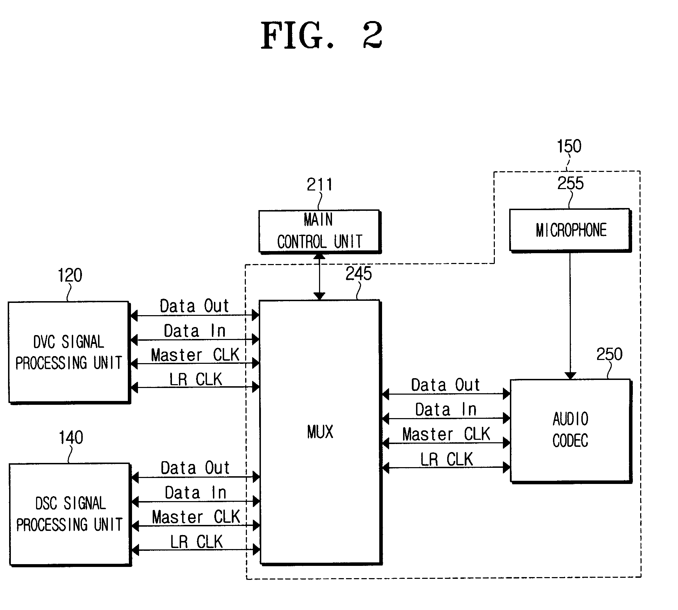

As shown in Figure 2, the audio unit 150 includes a MUX 245, an Audio CODEC 250 and a microphone 255.

The DVC signal processing unit 120 and the DSC signal processing unit 140, perform signal processing on moving image signals produced by the DVC imaging block 110 and the DSC imaging block 130 respectively. The processed moving image signals are transferred to the MUX 245. The DVC signal processing unit 120 and the DSC signal processing unit 140 transfer a master CLK for synchronization with the Audio CODEC 250.

The MUX 245 multiplexes the moving image signals received from the DVC signal processing unit 120 or the DSC signal processing unit 140 and transfers the multiplexed moving image signal to the Audio CODEC 250. The multiplexing process of the MUX 245 is controlled by the main control unit 211.

The Audio CODEC 250 receives electric signals from the audio unit 150 and codes the received electric signals and combines them with the moving image signals multiplexed by the MUX 245. The DSC and the DVC output a master CLK for frequency synchronization with the Audio CODEC 250. On the basis of the master CLK received from the DVC or the DSC through the MUX 245, the Audio CODEC 250 samples the coded audio signals and combines them with the multiplexed moving image signals. The Audio CODEC 250 samples the coded audio signals preferably within a range of 8kHz to 60kHz, for synchronization, not only with moving image signals received from the DSC, but also with the moving image signals received from the DVC. For example, suppose that the Audio CODEC 250 received a moving image signal from the DVC signal processing unit 120 through the MUX 245. Then the Audio CODEC 250 samples the audio signals received from the microphone 255 at 32kHz, 48kHz or the like. Conversely, when the Audio CODEC 250 receives a moving image signal from the DSC signal processing unit 140 through the MUX 245, it samples the audio signals received from the microphone 255 at 8kHz. Moreover, the Audio CODEC 250 combines the audio signal samples with the moving image signals received through the MUX 245, and records the audio signals.

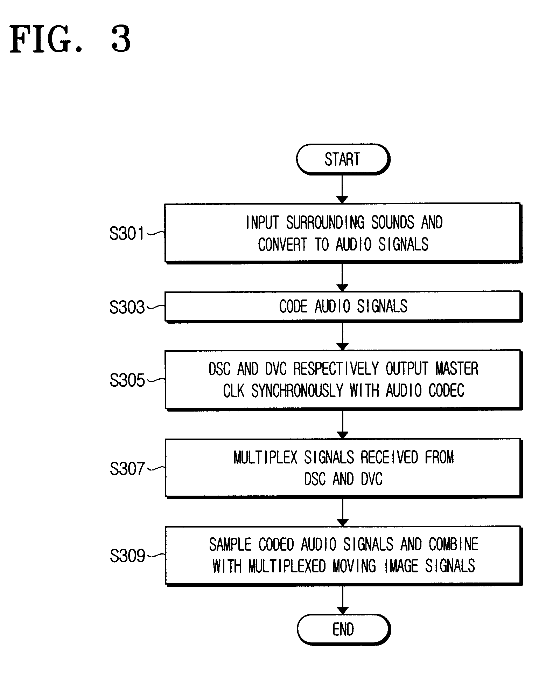

Referring to Figure 3, the microphone 255 senses the ambient sound and converts it into electric audio signals (S301). The electric signals from the microphone 255 are then transferred to the Audio CODEC 250.

The Audio CODEC 250 codes the electric signals received from the microphone 255 (S303).

The DVC signal processing unit 120 and the DSC signal processing unit 140 transfer their photographed moving image signals to the MUX 245, together with the master CLK for synchronization with the Audio CODED 250.

The MUX 245, under the control of the main control unit 111, multiplexes the moving image signals received from the DVC signal processing unit 120 and the DSC signal processing unit 140 and transfers the multiplexed signals to the Audio CODEC 250.

The Audio CODEC 250 receives the moving image signals multiplexed by the MUX 245, samples the electric signals based on the master CLK, sent together with the received moving image signals, and combines the electric signal samples with the received moving image signals (S309).

Therefore, the composite imaging apparatus is capable of synchronizing the moving image signals captured by the DVC imaging block 110 and the DSC imaging block 130 using one integrated Audio CODEC 250.

In short, the composite imaging apparatus of the present invention can be advantageously used for reducing the cost of manufacturing the apparatus, improving the efficiency of sound recording and, reducing the total volume of the composite imaging apparatus. Because of the reduced apparatus volume, the user can more conveniently carry around the composite imaging apparatus.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A Digital Still Camera (DSC) and Digital Video Camera (DVC) composition photographing apparatus, comprising:
a multiplexer (MUX) connected to the DSC and the DVC, respectively, for multiplexing moving image signals received from the DSC and the DVC, respectively;
an Audio coder/decoder (CODEC) for coding audio signals and combining the coded audio signals with the moving image signals multiplexed by the MUX; and a control unit for controlling the multiplexing process by the MUX.

2. The composition photographing apparatus according to claim 1, further comprising:
a microphone for inputting surrounding sounds and converting the sounds to electric audio signals.

3. The composition photographing apparatus according to claim 1, wherein the DSC and the DVC, respectively, output a master CLK for the synchronization with the Audio CODEC, and the Audio CODEC samples the coded audio signals based on the master CLK received through the MUX and combines the audio signal samples with the moving image signals multiplexed by the MUX.

4. The composition photographing apparatus according to claim 3, wherein the Audio CODEC samples the coded audio signals within a frequency range of 8kHz to 60kHz.

5. A sound recording method of a DSC and DVC composition photographing apparatus, the method comprising the steps of:
inputting surrounding sounds and converting the sounds to electric audio signals;
multiplexing moving image signals received from the DSC and the DVC, respectively;
coding the converted audio signals; and
sampling the coded audio signals and combining the audio signal samples with the multiplexed moving image signals.

6. The method according to claim 5 further comprising the step of:
outputting a master CLK from the DSC and the DVC for the synchronization with an Audio CODEC, respectively, wherein the Audio CODEC samples the coded audio signals based on the master CLK and combines the audio signal samples with the moving image signals.

7. The method according to claim 6, further comprising the steps of:
outputting the combined audio signal and moving images signals to at least one of a storage device, and an output device.

8. A combined camcorder and still camera apparatus comprising digital video imaging means (120), digital still imaging means (140), a microphone (255) and audio processing means (250) for digitising audio signals from the microphone (255), **characterised by** the digital video and digital still imaging means (120, 140) being configured to generate respective audio synchronisation clocks (Master CLK) and switching means (245) for selectively applying the audio synchronisation clocks (Master CLK) to the audio processing means (250) for synchronisation thereof.

9. An apparatus according to claim 8, operable in a video mode and a stills mode, wherein the state of the switching means (245) is set according to whether the apparatus is in video or stills mode.
